# EUROPEAN PATENT APPLICATION

(11) **EP 4 295 993 A1**
(43) Date of publication of application: **27.12.2023**
(21) Application number: 22382586.0
(22) Date of filing: 20.06.2022
(51) Int. Cl.: B23P 19/00

(54) **A GRIPPER TOOLING FOR INSERTING CLIPS IN WORKPIECES**

(71) Applicant: ABB SCHWEIZ AG, 5400 Baden (CH)
(72) Inventor: DURAN SANCHEZ, Jaume, 08192 SANT QUIRZE DEL VALLÈS (ES); ROVIRA PRUNS, Oriol, 08192 SANT QUIRZE DEL VALLÈS (ES)
(74) Representative: ZBM Patents - Zea, Barlocci & Markvardsen

(57) **Abstract**

Disclosed herein is a gripper tooling (1) comprising a frame (2) and a plurality of clip positioning actuators (3) mounted on the frame (2), wherein each clip positioning actuator (3) comprises a cylinder (4) with an internally guided piston (5), and a finger attachment (6) for a fingertip (7) at a distal end of the piston (5). In embodiments, the clip positioning actuators (3) may be mounted on the frame (2) in positions adjacent to each other in a rectangular array of at least two rows. Also disclosed are a clipping cell (100) and a method for inserting clips in workpieces (102).

## Description

The present disclosure relates to a gripper tooling for inserting clips in workpieces.

The present disclosure further relates to a clipping cell and a method for inserting clips in workpieces.

### BACKGROUND

It is known to use custom designed clipping cells using an industrial robot comprising a gripper tooling, i.e., "end of arm tooling" or EOAT, to insert clips or fasteners in workpieces, such as vehicle instrumental panels, consoles, bumpers, etc., in a manufacturing line of vehicle body parts or other manufacturing lines. This type of clipping cells also includes a support fixture for fixing each workpiece to which clips are to be attached, and a clip feeder for supplying clips to the gripper tooling.

The insertion of the clips in the workpieces comprises pushing each one of the clips one by one into corresponding holes or seats previously made in a workpiece. This operation of inserting clips using a gripper tooling requires a high degree of accuracy in their position and orientation before inserting the clip.

For example, a known type of gripper tooling comprises a frame to be detachably attached to a wrist axis of an industrial robot, and a line of conventional cylinder-piston actuators configured for driving a respective plurality of fingertips, each fingertip being adapted for picking and holding a clip, e.g. with magnets. Further, the piston of each cylinder-piston actuator is connected to a guiding system that is external to the cylinder itself and comprises a guide rail fixed to the frame parallel to the cylinder, and a runner attached to a distal end of the piston and sliding along the guide rail, and wherein a distal end of the runner is attached to a corresponding fingertip.

Typically, this kind of gripper tooling comprises up to six cylinder-piston actuators, which are distributed along a semi-circular line.

In each cycle of the robot, first the gripper tooling is placed in correspondence with the clip feeder and the cylinder-piston actuators are driven to move simultaneously the fingertips for picking the clips from cavities of a cavities plate of the clip feeder, where the clips are previously positioned in a predetermined position according to the configuration of the semi-circular line of the fingertips. Then, the gripper tooling with the clips is displaced towards the workpiece and the cylinder-piston actuators are driven one after the other to move each fingertip individually and insert the clips one by one in the workpiece.

However, this kind of gripper tooling using such a guiding system attached to the cylinder-piston actuators results in a quite heavy assembly. Therefore, with this configuration there is a limit of about six cylinder-piston actuators, to guarantee that the weight does not exceed the maximum load supported by the industrial robot (typically a 20 Kg payload robot).

Furthermore, the semi-circular configuration of the cylinder-piston actuators implies repeated rotation movements of the gripper tooling for positioning each fingertip before inserting the clip in the workpiece. Thus, this repeated movement causes the electrical wiring of the cylinder-piston actuators to be continuously twisted, with a high risk of damage.

### SUMMARY

In a first aspect, a gripper tooling for inserting clips in workpieces is provided.

Clips, also known as fasteners, are relatively flexible fastening parts that are attached to an object, for example a vehicle bumper or a vehicle console, to allow the object to be easily assembled with others by pressure (for example, to assemble the vehicle console to a vehicle body). They may be, for example, metallic or plastic, and may have a variety of sizes, shapes, and retaining forces.

The gripper tooling comprises:
- a frame to be detachably attached to a wrist axis of an industrial robot; and
- a plurality of clip positioning actuators mounted on the frame, wherein each clip positioning actuator comprises a cylinder with an internally guided piston, and a finger attachment for a fingertip at a distal end of the piston.

The use of this type of clip positioning actuators comprising a cylinder with an internally guided piston allow to drastically reduce the weight of the gripper tooling of the present disclosure, in comparison with the heavy gripper toolings known in the art equipped with conventional cylinder-piston actuators attached to respective guiding systems.

In the present disclosure, a "cylinder with internally guided system" is a precision cylinder with internal guide function, such that the movement has a high accuracy, without the need to provide an external or additional guiding system.

Therefore, since the weight of the gripper tooling of the present disclosure is reduced, it is possible to increase the number of this type of clip positioning actuators: for example, the gripper tooling may comprise twelve clip positioning actuators, for the same 20 Kg payload robot. As a result, more clips may be applied to the workpiece in each working cycle, before the robot has to return to a loading position to pick more clips, thus achieving better cycle times of the robot.

Furthermore, the internal guided function of this type of clip positioning actuators provides a high precision and reliability of the clipping operation. An example of this type of precision cylinders with internal guided function are those named Precision Cylinders (series MTS) of the company SMC Corporation (Tokyo, Japan).

According to one example of the present disclosure, the clip positioning actuators may be mounted on the frame in positions adjacent to each other in a rectangular array of at least two rows; for example, at least two rows and at least two columns; for example, at least two rows and at least four columns.

By rectangular array it is meant an array wherein the clip positioning actuators are arranged according to straight columns and rows.

By virtue of this rectangular array of at least two rows (for example using two rows of six cylinder-piston actuators each one), it is possible to manufacture a compact gripper tooling. Further, the gripper tooling may be moved according to simple linear movements, therefore avoiding twisting movements, and hence preventing the electrical wires of the cylinder-piston actuators from being damaged.

In one example, each internally guided piston may comprise a keying system providing guided longitudinal displacement of the piston in the cylinder and preventing rotation of the piston with respect to the cylinder.

In one example, the gripper tooling further may comprise a plurality of fingertips, wherein each fingertip is attached to the finger attachment of a clip positioning actuator, and configured to pick a clip.

In the present disclosure, a fingertip is a picking element configured to releasably hold a type of clip.

In one preferred example, the gripper tooling further may comprise at least two different types of fingertips for respective different types of clips.

Therefore, if different types of clips have to be attached to a workpiece, it is possible to load the gripper tooling with at least two different types of fingertips. Hence, the different type of clips may be inserted in the workpiece in the same cycle of the robot, without the need of changing the gripper tooling or of changing the fingertips attached to the positioning actuators, thus reducing cycle times.

According to another aspect, the present disclosure also provides a clipping cell for inserting clips in workpieces, comprising:
- an industrial robot,
- a gripper tooling as disclosed herein;
- a support fixture to position a workpiece to which clips have to be attached;
- a control unit to control the operation of the industrial robot to pick a plurality of clips simultaneously with the gripper tooling and insert the clips sequentially one after the other in the workpiece; and
- a clip feeder for supplying clips to the gripper tooling.

In one example, the clipping cell may further comprise at least one tooling storage for storing gripper toolings within the reach of the robot.

In one preferred example, when the clip positioning actuators of the gripper tooling are mounted on the frame in positions adjacent to each other in a rectangular array of at least two rows, the clip feeder may comprise:
- at least one feeder plate configured to receive clips and arrange them in a predetermined position;
- at least one cavities plate accessible to the gripper tooling attached to the robot, wherein the cavities plate comprises a plurality of cavities arranged in a predetermined array matching the configuration of the array of the clip positioning actuators in the gripper tooling, and
- a feeding robot configured to pick clips from the at least one feeder plate and position the clips in the cavities of the cavities plate.

According to another aspect, the present disclosure also provides a method for inserting clips in workpieces, comprising:
- placing a workpiece in a predetermined position on a support fixture;
- providing a gripper tooling with a plurality of clip positioning actuators arranged in a rectangular array of at least two rows, each clip positioning actuator comprising a cylinder with an internally guided piston, and a finger attachment for a fingertip at a distal end of the piston;
- providing a plurality of clips on a cavities plate, arranged in a predetermined array position matching the configuration of the array of the clip positioning actuators in the gripper tooling, by means of a feeding robot;
- operating the gripper tooling to pick simultaneously the plurality of clips from the cavities plate, one with each clip positioning actuator; and
- operating the gripper tooling to sequentially insert the clips one by one in the workpiece.

Although a rectangular array of at least two rows is disclosed herein, it should be noted that the clip positioning actuators may be mounted on the frame of the gripper tooling according to different configurations as required, for example according to a straight line of one row, or even in a semi-circular line.

### BRIEF DESCRIPTION OF THE DRAWINGS

Non-limiting examples of the present disclosure will be described in the following, with reference to the appended drawings, in which:
Figure 1 is a perspective view of a gripper tooling according to one example of the present disclosure;
Figure 2 is a top plan view of the gripper tooling in figure 1;
Figure 3 is a lateral elevational view of the gripper tooling in figure 1;
Figure 4 is a perspective view of an example clip positioning actuator of the gripper tooling according to the present disclosure;
Figure 5 is a perspective view of an example industrial robot with the gripper tooling of the present disclosure;
Figure 5a is a detail view of the gripper tooling attached to the industrial robot in figure 5, showing the tool changer;
Figure 6 is a schematic elevational view of an example industrial robot with the gripper tooling, and showing a support fixture with a workpiece, for a clipping cell according to the present disclosure;
Figure 7 is a perspective view of an example tooling storage for a gripper tooling, of a clipping cell of the present disclosure;
Figure 8 is a perspective view of the tooling storage in figure 7, with a gripper tooling stored thereon;
Figure 9 is a perspective view of an example clip feeder, of a clipping cell of the present disclosure;
Figure 9a is a detail view of the cavities plates of the clip feeder in figure 9, showing the array of cavities;
Figure 10 is a top plan schematic diagram of a clipping cell according to one example of the present disclosure; and
Figure 11 is a flowchart of an example of a method for inserting clips in workpieces, for example using the gripper tooling according to the present disclosure.

### DETAILED DESCRIPTION OF EXAMPLES

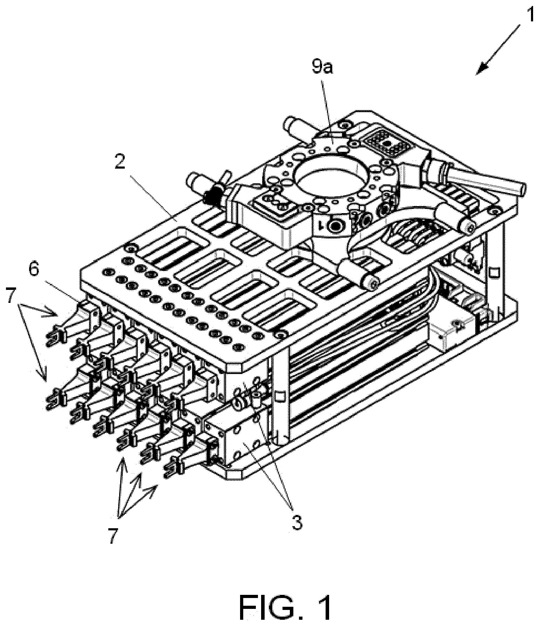

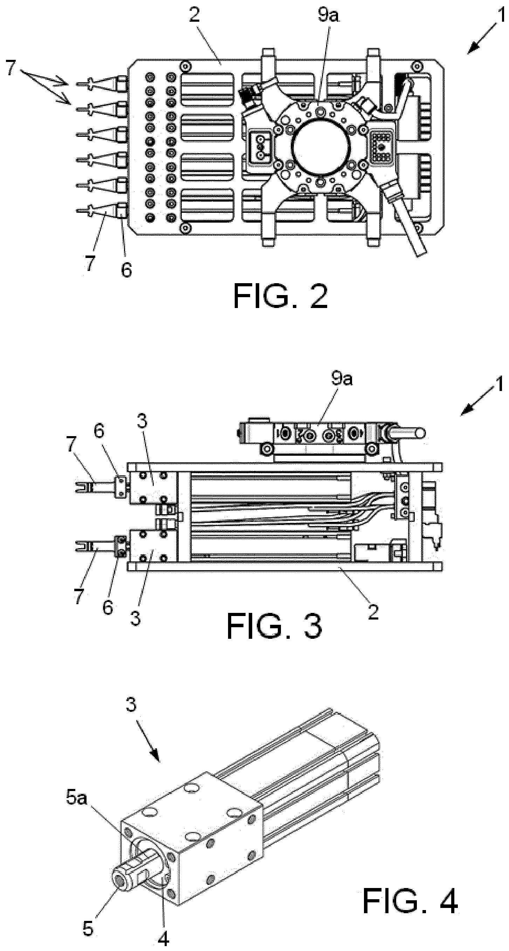

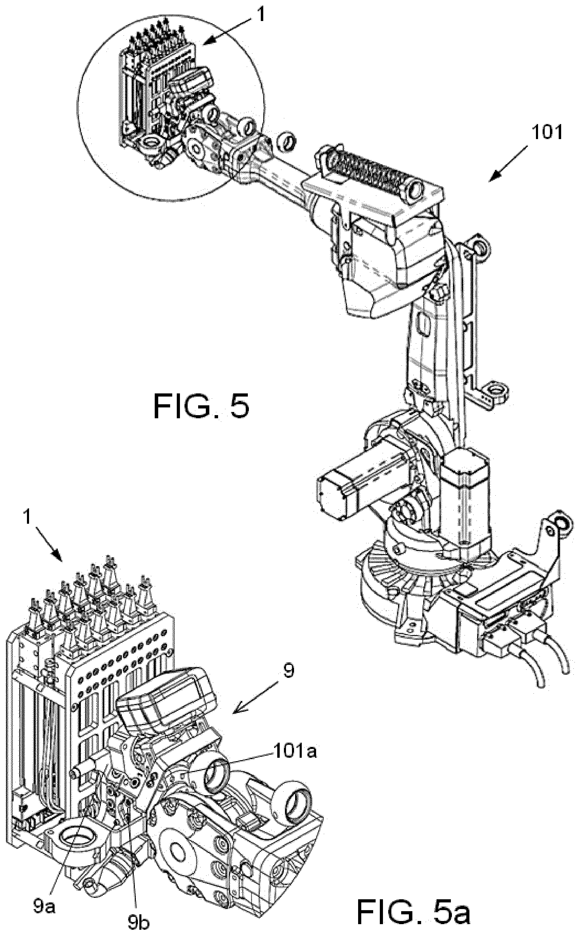

Figures 1 to 3 show a gripper tooling 1, according to the present disclosure, for inserting clips in workpieces 102. The gripper tooling 1 comprising:
- a frame 2 to be detachably attached to a wrist axis 101a of an industrial robot 101 (visible in Figure 5); and
- a plurality of clip positioning actuators 3 mounted on the frame 2, wherein each clip positioning actuator 3 comprises a cylinder 4 with an internally guided piston 5 (visible in Figure 4), and a finger attachment 6 for a fingertip 7 at a distal end of the piston 5.

An example of this type of precision cylinders with internal guided function are those named Precision Cylinders (series MTS) of the company SMC Corporation (Tokyo, Japan).

Each internally guided piston 3 may comprise a keying system providing guided longitudinal displacement of the piston 5 in the cylinder 4 and preventing rotation of the piston 5 with respect to the cylinder 4.

Figure 4 shows a simplified perspective view of a clip positioning actuator 3 of the gripper tooling 1 according to the present disclosure, with an example keying system wherein the piston 5 includes at least a longitudinal groove 5a on its outer surface, in which a respective rail (not shown) projecting from the inner surface of the cylinder 4 may slide. This groove and rail keying system guides the reciprocating movement of the piston 5 with respect to the cylinder, and at the same time prevents relative rotation between piston 5 and cylinder 4. This system provides a high accuracy in the position and the orientation of a fingertip 7 attached to the piston 5, and therefore allows a high accuracy in the operation of inserting a clip held by the fingertip into a workpiece.

Furthermore, the use of this type of clip positioning actuators 3 allows providing a gripper tooling 1 with a relatively low weight, contributing to a smooth and accurate operation and allowing the use of a relatively high number of positioning actuators 3 and/or the use of a relatively light and fast robot.

In examples, the clip positioning actuators 3 may be mounted on the frame 2 in positions adjacent to each other in a rectangular array of at least two rows: in figures 1 to 3, the gripper tooling 1 comprises twelve clip positioning actuators 3 arranged in a rectangular array of two rows, with six clip positioning actuators 3 in each row. This configuration is suitable, for example, for a gripper tooling attached to a 20 Kg payload robot.

It should be noted that a different number of clip positioning actuators, and/or a different number of rows in the rectangular array, may be strategically selected, depending on the type of industrial robot used for the clipping operation, the number and kind of clips to be inserted in the workpiece, etc.

In the example shown in the figures, the gripper tooling 1 comprises twelve fingertips 7, each attached to the finger attachment 6 of one of the twelve clip positioning actuators 3 (see for example figure 3), and each fingertip 7 is configured to pick a clip.

In examples, the gripper tooling 1 may comprise at least two different types of fingertips 7 for respective different types of clips: for example, if three different kinds of clips (not shown) have to be inserted into a workpiece, fingertips 7 with three different configurations, each suitable for one kind of clip, may be attached to the gripper tooling 1. The number of fingertips 7 with each configuration, and their positions on the gripper tooling 1, may be adapted as convenient in each case.

Each fingertip 7 of the clip positioning actuators 3 may be provided with a retaining system (not shown) to hold a corresponding clip. For example, in the case of metal clips, fingertips 7 may be provided with at least one magnet. Furthermore, each kind of fingertip 7 may be shaped such that a clip is picked and retained by the fingertip 7 in a specific position and orientation, such that the operation of inserting the clips in the workpiece may be fast and accurate.

Figure 5 shows in perspective view an example of an industrial robot 101 and a gripper tooling 1 according to the present disclosure.

The industrial robot 101 may be, for example, a robot comprising at least four axes, and preferably six axes, between a robot base and a robot wrist. A suitable commercial robot may be for example model known as IRB 2600, available from ABB LTD (Zurich, Switzerland).

As can be seen in more detail in figure 5a, the gripper tooling 1 is attached to the wrist axis 101a of the industrial robot 101 by means of a tool changer 9. In this example, the frame 2 of the gripper tooling 1 comprises a tool plate 9a of a tool changer 9 (see also figures 1 to 3).

A tool changer 9, also known as a quick-change device, may be a coupling device with two cooperating and mating parts, usually referred to as master plate 9b and tool plate 9a, which are designed to lock or couple together, either manually or automatically, and can pass from one side to the other utilities such as electric or pneumatic signals, and/or other. They may also be designed to carry a payload. The master plate 9b is usually attached to the wrist axis 101a of the robot 101 and carries a locking mechanism, for example mechanical or pneumatic, and the tool plate 9a is attached to the gripper tooling 1 and carries suitable elements to be engaged by the locking mechanism of the master plate 9b. A tool changer 9 employed in examples of the present disclosure may be of any known type, for example it may be an automatic tool changer that uses a pneumatic system to lock the two parts together.

It should be noted that instead of using a tool changer as disclosed herein, other type of known attaching systems may be used to attach the gripper tooling to the wrist of the robot.

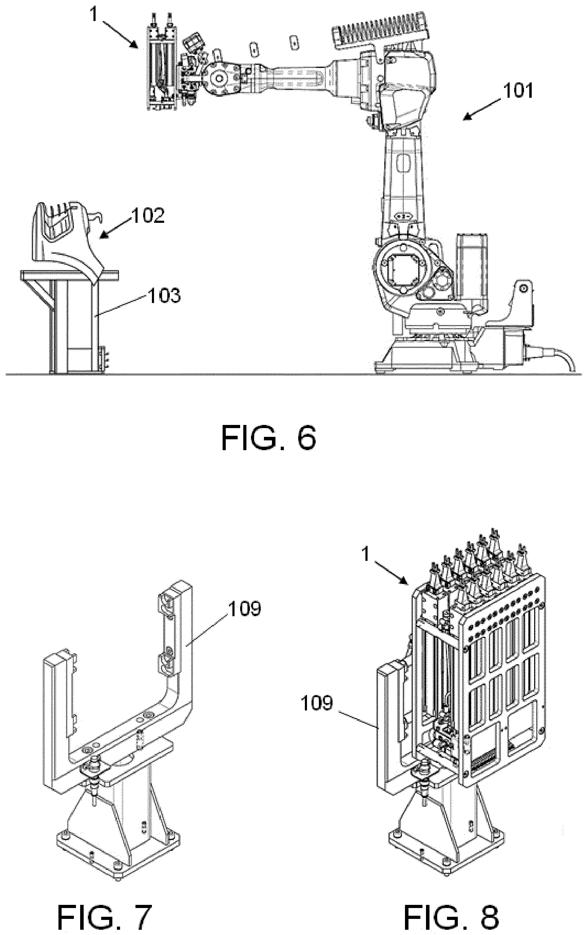

A clipping cell 100 according to an example of the present disclosure will be described in the following, with reference to Figures 6 to 10.

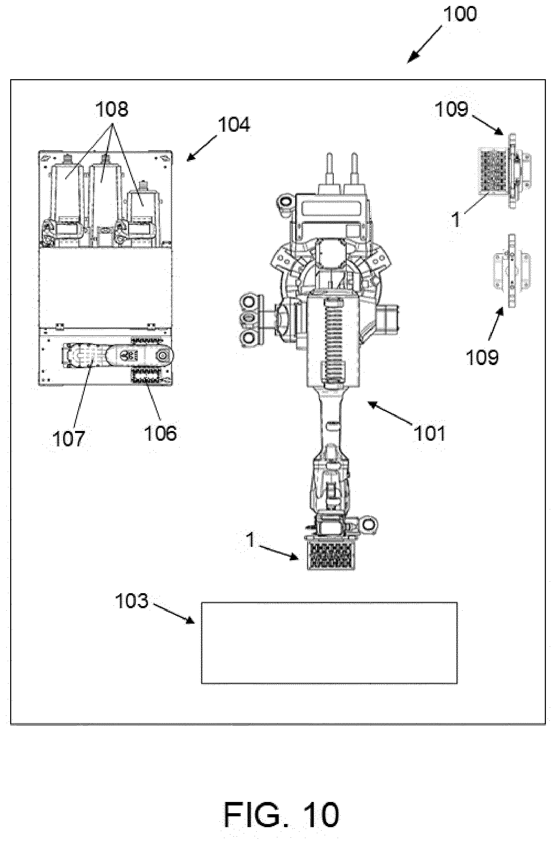

Figure 10 shows a schematic diagram of clipping cell 100, which comprises:
- an industrial robot 101, arranged in a working area of the clipping cell 100;
- a gripper tooling 1 as disclosed above, attached to a wrist axis 101a of the industrial robot 101 (e.g., as in Figures 5 and 5a);
- a support fixture 103 to position a workpiece 102 to which clips have to be attached by means of the gripper tooling 1 of the industrial robot 101 (see for example figure 6); and
- a control unit (not shown) to control the operation of the industrial robot 101 to pick a plurality of clips simultaneously with the gripper tooling 1 and insert the clips sequentially one after the other in the workpiece 102, as will be described in more detail below.

In examples, the workpiece 102 may be a vehicle bumper (as shown in figure 6), an instrumental panel, a console, other parts of a vehicle, or any other object to which clips must be attached. The support fixture 103 is within reach of the robot 101 and in a predetermined position with respect to the robot 101, such that the robot 101 can reach areas of the workpiece 102 to which corresponding clips must be attached in a specific position and orientation, following pre-programmed instructions.

The control unit may further control the positioning of the workpiece 102 on the support fixture 103.

For example, the support fixture 103 may comprise positioning sensors (not shown) to detect a predetermined position of the workpiece 102 on the support fixture 103. Hence, the control unit may receive a control signal from the presence sensors comprised in the support fixture 103, thus monitoring the correct position of a workpiece 102 on the support fixture 103. Once the workpiece 102 is correctly positioned on the support fixture 103, the control signal may indicate the control unit to go ahead with the clipping operation by the industrial robot 101.

Also, the support fixture 103 may comprise at least one clamp (not shown) to fix the workpiece 102 into work position.

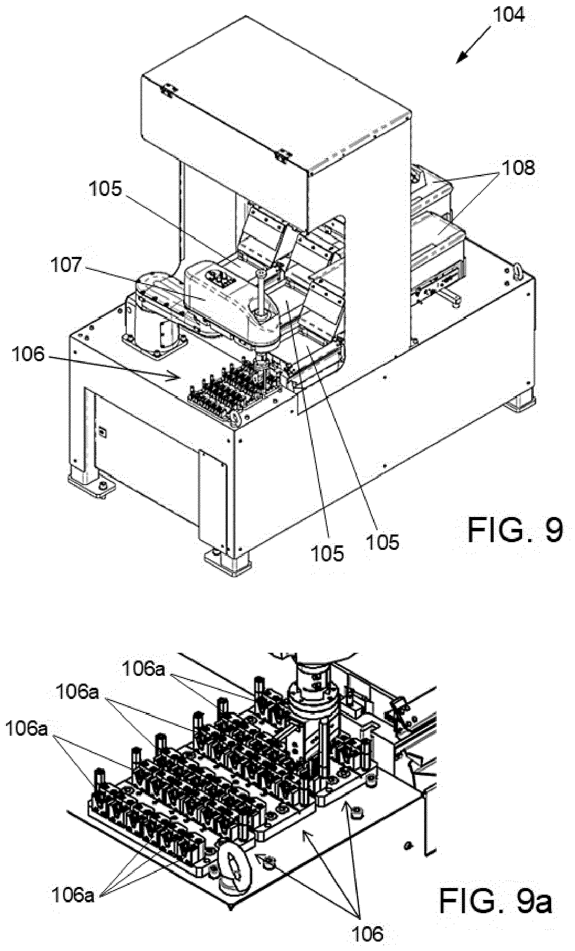

The clipping cell 100 may further comprise a clip feeder 104 for supplying clips to the gripper tooling 1. Figure 9 shows a perspective view of an example of a clip feeder 104, which comprises:
- at least one feeder plate 105 configured to receive clips and arrange them in a predetermined position;
- at least one cavities plate 106 accessible to the gripper tooling 1 attached to the robot 101, wherein the cavities plate 106 comprises a plurality of cavities 106a in a predetermined array position matching the configuration of the array of the clip positioning actuators 3 in the gripper tooling 1, and
- a feeding robot 107 configured to pick clips from the feeder plates 105 and position them in the cavities 106a of the cavities plate 106, each type of clip being placed in predetermined positions of the array, to match the positions of the types of fingertips 7 in the array of clip positioning actuators 3 of the gripper tooling 1. Thus, when the gripper tooling 1 picks the clips from the cavities plate 106, each type of clip will be picked by a matching type of fingertip 7.

In the example shown in figure 9, the clip feeder 104 is provided with three feeder plates 105, wherein each one may receive a different type of clips. Furthermore, in the example, the clip feeder 104 comprises three cavities plates 106, wherein each cavities plate 106 comprises twelve cavities 106a arranged in two rows, with six cavities 106a in each row (visible in Figure 9a).

Also, the clip feeder 104 may comprise at least one feeder hopper 108, in the example three feeder hoppers 108 are used (visible in Figures 9 and 10), each one containing a plurality of a type of clips, and configured to gradually supply a type of clips to a corresponding feeder plate 105.

Therefore, when in use, an operator may introduce the different type of clips in the respective feeder hoppers 108. Furthermore, the feeder hoppers 108 and the feeder plates 105 may be provided with vibration systems (not shown), thus allowing the clips to be driven from each feeder hopper 108 to the respective feeder plate 105. Also, a camera (not shown) may monitor a correct position of the clips on each feeder plate 105. When a correct position of a respective clip has been performed, a control signal is sent to the feeding robot 107 for picking the clip from the feeder plate 105 and positioning it in a predetermined cavity 106a of a respective cavities plate 106.

Other configurations of the clip feeder may also be implemented. Alternatively, a known bowl feeder may be used.

Furthermore, as shown in figure 10, the clipping cell 100 may also comprise at least one tooling storage 109 for storing gripper toolings 1 within the reach of the robot 101. In this example, the clipping cell 100 is provided with two tooling storages 109: in figures 7, 8 and 10, one tooling storage 109 is empty (figure 7) and the other is supporting a gripper tooling 1 (figure 8). Each tooling storage 109 may comprise a supporting structure including holdings means, such as pneumatic, mechanical, or vacuum systems, for holding a gripper tooling 1.

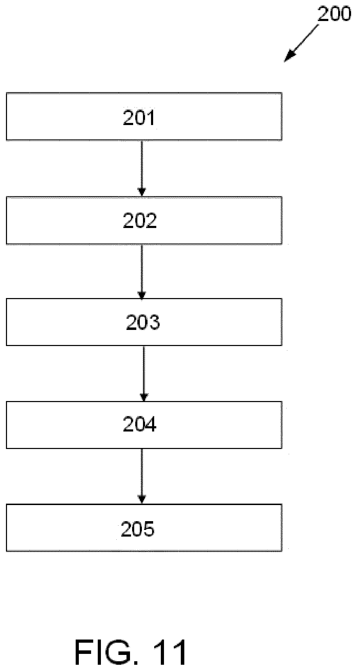

Figure 11 shows a flowchart of an example of a method 200 for inserting clips in workpieces 102 using a gripper tooling 1 according to examples as previously described. This example of a method 200 for inserting clips in workpieces comprises:
- in step 201, placing a workpiece 102 in a predetermined position on a support fixture 103;
- in step 202, providing a gripper tooling 1, having a plurality of clip positioning actuators 3 arranged in a rectangular array of at least two rows, each clip positioning actuator 3 comprising a cylinder 4 with an internally guided piston 5, and having a fingertip 7 releasably attached to a finger attachment 6 at a distal end of the piston 5;
- in step 203, providing by means of a feeding robot 107 a plurality of clips in the cavities of a cavities plate 106, the feeding robot 107 arranging the clips in a predetermined array position matching the configuration of the array of the clip positioning actuators 3 in the gripper tooling 1;
- in step 204, operating the gripper tooling 1 to pick simultaneously the plurality of clips from the cavities plate 106, one with each clip positioning actuator 3: the gripper tooling 1 is moved by the robot 101 to a position where the array of clip positioning actuators 3 of the gripper tooling 1 is correspondence with the array of cavities of cavities plate 106, and the clip positioning actuators 3 are then extended to a position in which the fingertips 7 attached to the clip positioning actuators 3 pick the clips from the cavities plate 106; and
- in step 205, operating the gripper tooling 1 to sequentially insert the clips one by one in the workpiece 102.

The fingertips 7 of the clip positioning actuators 3 may have a suitable retaining system, such as a magnetic system, and a suitable shape for the clip, allowing the clips to be picked from the cavities plate 106 in step 204, and retained on the fingertip in a precise position and orientation.

In step 205, the gripper tooling 1 is first moved by the robot 101 to a first predetermined position with respect to the workpiece 102, and in a first predetermined orientation, and a first clip is pressed into a first seat of the workpiece 102 by extending the piston 5 of a corresponding first clip positioning actuator 3. The clip may be released from the fingertip 7 that carried it, and remain attached to the workpiece 102, e.g. because the force with which it is press-fit into the seat of the workpiece is higher than the fingertip retaining force (e.g. higher than the force exerted by fingertip retaining magnets, in case of metal clips). Then the gripper tooling 1 is moved by the robot 101 to a second predetermined position with respect to the workpiece 102, and in a second predetermined orientation, and a second clip is similarly attached in a second seat of the workpiece by a second clip positioning actuator 3, and the sequence is repeated until all the clips carried by the gripper tooling 1 have been attached to the workpiece 102. Different kinds of clips may be attached to the workpiece in the above operation, with corresponding different kinds of fingertips 7, as disclosed above.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A gripper tooling (1) for inserting clips in workpieces (102) comprising:
- a frame (2) to be detachably attached to a wrist axis (101a) of an industrial robot (101); and
- a plurality of clip positioning actuators (3) mounted on the frame (2), wherein each clip positioning actuator (3) comprises a cylinder (4) with an internally guided piston (5), and a finger attachment (6) for a fingertip (7) at a distal end of the piston (5).

2. The gripper tooling (1) according to claim 1, wherein the clip positioning actuators (3) are mounted on the frame (2) in positions adjacent to each other in a rectangular array of at least two rows.

3. The gripper tooling (1) according to claim 1 o 2, wherein each internally guided piston (5) comprises a keying system providing guided longitudinal displacement of the piston (5) in the cylinder (4) and preventing rotation of the piston (5) with respect to the cylinder (4).

4. The gripper tooling (1) according to claim 3, wherein the internal guided piston (5) includes at least a longitudinal groove (5a) slidable on a respective rail of the cylinder (4).

5. The gripper tooling (1) according to any of the preceding claims, further comprising a plurality of fingertips (7), wherein each fingertip (7) is attached to the finger attachment (6) of a clip positioning actuator (3), and configured to pick a clip.

6. The gripper tooling (1) according to any of the preceding claims, further comprising at least two different types of fingertips (7) for respective different types of clips.

7. The gripper tooling (1) according to any of the preceding claims, wherein the frame (2) comprises a tool plate (9a) of a tool changer (9).

8. A clipping cell (100) for inserting clips in workpieces (102), comprising:
- an industrial robot (101),
- a gripper tooling (1) according to any of claims 1 to 7;
- a support fixture (103) to position a workpiece (102) to which clips have to be attached;
- a control unit to control the operation of the industrial robot (101) to pick a plurality of clips simultaneously with the gripper tooling (1) and insert the clips sequentially one after the other in the workpiece (102); and
- a clip feeder (104) for supplying clips to the gripper tooling (1).

9. The clipping cell (100) according claim 8, further comprising at least one tooling storage (109) for storing gripper toolings (1) within the reach of the robot (101).

10. The clipping cell (100) according claim 8 or 9, wherein the clip positioning actuators (3) of the gripper tooling (1) are mounted on the frame (2) in positions adjacent to each other in a rectangular array of at least two rows, and wherein the clip feeder (104) comprises:
- at least one feeder plate (105) configured to receive clips and arrange them in a predetermined position;
- at least one cavities plate (106) accessible to the gripper tooling (1) attached to the robot (101), wherein the cavities plate (106) comprises a plurality of cavities (106a) arranged in a predetermined array matching the configuration of the array of the clip positioning actuators (3) in the gripper tooling (1), and
- a feeding robot (107) configured to pick clips from the at least one feeder plate (105) and position the clips in the cavities (106a) of the cavities plate (106).

11. The clipping cell (100) according to any of claims 8 to 10, wherein the control unit further controls the positioning of the workpiece (102) on the support fixture (103).

12. A method for inserting clips in workpieces (102), comprising:
- placing a workpiece (102) in a predetermined position on a support fixture (103);
- providing a gripper tooling (1) with a plurality of clip positioning actuators (3) arranged in a rectangular array of at least two rows, each clip positioning actuator (3) comprising a cylinder (4) with an internally guided piston (5), and a finger attachment (6) for a fingertip (7) at a distal end of the piston (5).
- providing a plurality of clips on a cavities plate (106), arranged in a predetermined array position matching the configuration of the array of the clip positioning actuators (3) in the gripper tooling (1), by means of a feeding robot (107);
- operating the gripper tooling (1) to pick simultaneously the plurality of clips from the cavities plate (106), one with each clip positioning actuator (3); and
- operating the gripper tooling (1) to sequentially insert the clips one by one in the workpiece (102).
